# EUROPEAN PATENT APPLICATION

(11) **EP 2 267 705 A1**
(43) Date of publication of application: **29.12.2010**
(21) Application number: 09305600.0
(22) Date of filing: 25.06.2009
(51) Int. Cl.: G11B 7/26

(54) **Method and apparatus for mastering tracks on a disc by utilizing an electron beam, and respective data disc**

(71) Applicant: Thomson Licensing SA, 92130 Issy-les-Moulineaux (FR)
(72) Inventor: Przygodda, Frank, 78050, Villingen-Schwenningen (DE); Knappmann, Stephan, 78658, Zimmern ob Rotweil (DE); Krause, Michael, 78050, Villingen-Schwenningen (DE)
(74) Representative: Arnold, Klaus-Peter

(57) **Abstract**

The method provides a recording of data on a rotating disc by using an electron beam for recording marks (m1-m5) along a track on the disc, the electron beam performing a wobble oscillation in a radial direction of the disc with a wobble amplitude (A_{2T}) for recording at least two tracks (T1, T2) in parallel, and modulating the electron beam intensity for recording alternatingly a mark or a fraction of a mark of the first track or the second track. For recording a mark of a defined width, the electron beam is switched on in accordance with the mark width of the marks of each specific track, and is switched off for providing spaces (s1-s3) between the marks of each track or a land area (LA) separating the marks of the first and second track. The method is used advantageously for recording tracks with a track pitch being below the diffraction limit for manufacturing a master disc for a production of read-only optical discs with a high data density.

## Description

### TECHNICAL FIELD OF THE INVENTION

The invention relates to a method for mastering a disc by utilizing an electron beam for recording marks along a track of the disc, and to a respective apparatus. The invention relates further to a data disc, in particular to a master disc, manufactured by the method for replicating optical discs.

### BACKGROUND OF THE INVENTION

Optical storage media are media in which data are stored in an optically readable manner by means of a pickup including a laser and an optical detector, for example a photo detector. The detector is used for detecting reflected light of the laser beam when reading data on the storage medium. In the meanwhile a large variety of optical storage media are known, which are operated with different laser wavelength, and which have different sizes for providing storage capacities from below one Gigabyte up to 50 Gigabyte. The formats include read-only formats, write-once optical media as well as rewritable formats. Digital data are stored on these media along tracks in one or more layers of the media.

The storage medium with the highest data capacity is at present the Blu-ray disc (BD), which allows to store up to about 50 GB on a dual layer disc. For reading and writing of a Blu-ray disc a pickup with a laser wavelength of 405 nm and a numerical aperture of 0,85 is used. On the Blu-ray disc a track pitch of 320 nm and a mark length from 2T to 8T or 9T is implemented, where T is the channel bit length and wherein 2T corresponds with a minimum mark length of 138 - 160 nm.

The diffraction limit limit of optical instruments as described by the Abbe theory is about λ/2NA, which is 238nm for a Blu-ray type pickup having a laser wavelength λ = 405nm and a numerical aperture NA=0,85. 238nm represents here the period of the smallest detectable mark frequency, period which is constituted of a pit and of a land of the same length. λ/2NA corresponds also with the focus diameter of the laser beam on the optical disc. By providing a reference level for the high frequency readout signal, very small amplitude changes can be detected in accordance with reflectivity changes due to the pits and lands, which allows to detect with a Blu-ray type pickup pits having a length of about λ/4NA=120nm.

New optical storage media with a super-resolution structure offer the possibility to increase the data density by a factor of two to four in one dimension as compared with the Blu-ray disc. This is possible by including a nonlinear layer, which is placed above the data layer of the optical storage medium, and which significantly reduces the effective size of a light spot used for reading from or writing to the optical storage medium. Therefore, the super-resolution effect allows to record and read data stored in marks of an optical disc, which have a size being below the diffraction limit of λ/4NA in track direction of a corresponding optical pickup. The nonlinear layer is often called a super-resolution near-field structure (Super-RENS) layer because it is assumed that for some specific materials, the optical effect, which reduces the effective spot size of the laser beam, is based on a near-field interaction between the marks and spaces of the data layer and the nonlinear layer.

A further increase in data density can be obtained by reducing the track pitch of the optical disc. In WO 2008/071653 an optical disc is described comprising two spirals having pits of different width, which are interleaved with each other such that the pit width is changing alternatingly between adjacent tracks. The track pitch between the tracks of the two spirals is reduced below the diffraction limit of λ/2NA of a respective pickup for reading of the data, by still providing a push-pull signal for a tracking regulation.

In US 2004/0057158 and EP-A-1347450 electron beam recorders are described for manufacturing a master disc by using an electron beam performing a wobble oscillation for recording a pit train along a track of a rotating disc.

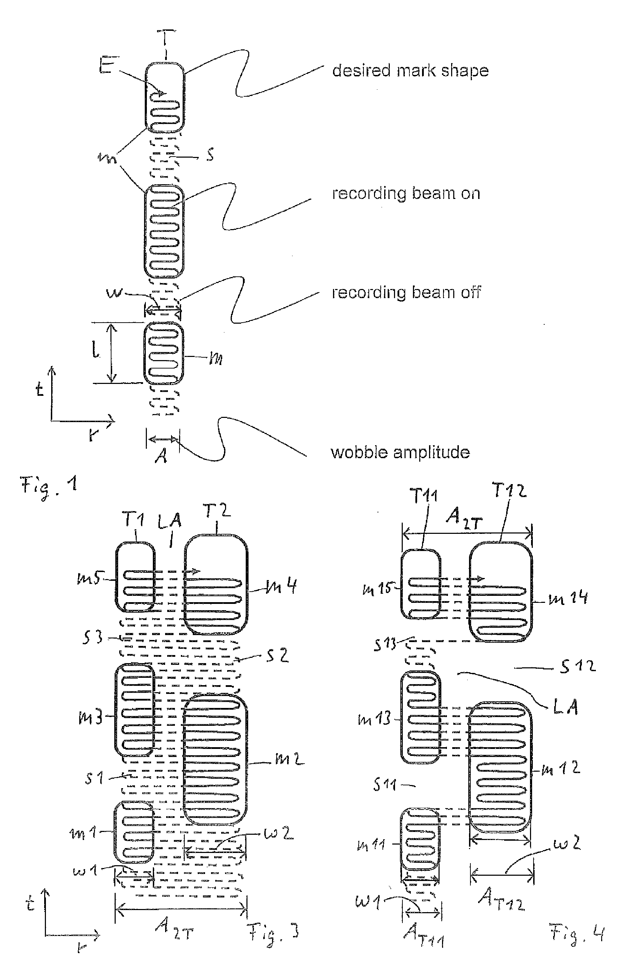

An electron beam recorder allows to record marks along a track of a rotating disc, as will be described with regard to Fig. 1. The electron beam recorder provides an electron beam E, which has a focus on the disc being much smaller than a mark to be recorded on the disc. To record a mark m having a defined width w and length l, the electron beam E is wobbled in radial direction r of the disc with a constant wobble amplitude A. Due to the rotation of the disc, the electron beam E moves along the disc in track direction t. The length l of the mark m is dependent on the rotating speed of the optical disc and the on-time of the electron beam. For providing a subsequent space s, the electron beam is switched off or its intensity is reduced to a negligible low value. For the next mark m, the electron beam is turned on again.

The electron beam is therefore oscillating periodically between the left and right sides of the marks with a constant wobble amplitude A for each oscillation for providing marks with a defined width w. The number of oscillations, during which the electron beam is on and the length of a single oscillation define the length of each mark. The first mark of track T contains for example four and the second mark six oscillations, during which the electron beam is continuously switched on. The length of a recorded single oscillation on the disc is of course dependent on the rotating speed of the disc.

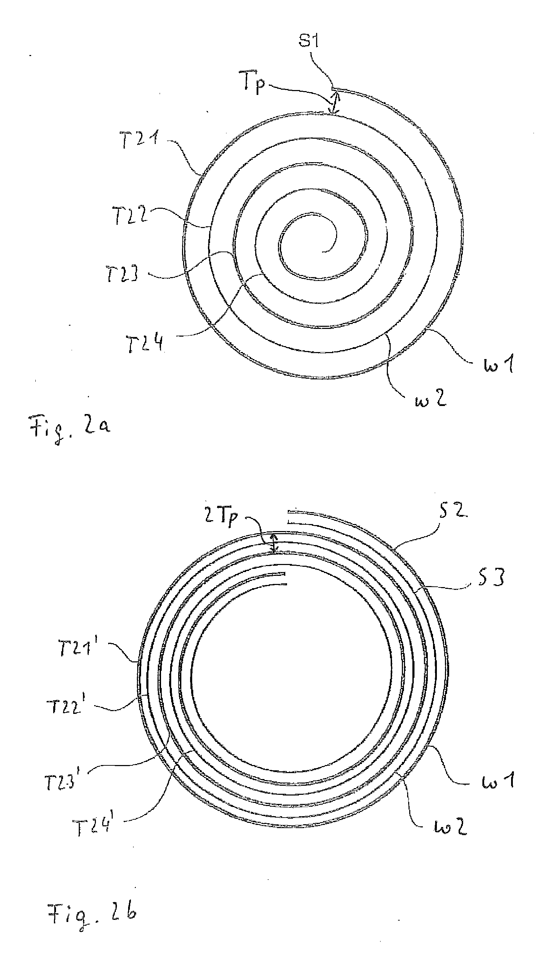

The electron beam is movable in radial direction r of the disc and for recording consecutive tracks T21-T24 being arranged within a single spiral S1 consisting of marks and spaces as shown in Fig. 2a, the electron beam recorder starts for example at an inner location of the optical disc and provides a constant radial feed for the electron beam in the direction of the outside of the disc, until the useful area of the optical disc is completely recorded, or until all digital data to be stored on the optical disc are recorded. The track pitch Tp between consecutive tracks is therefore defined by the distance, which the electron beam is moved along the radial direction r during one revolution of the disc.

The disc is e.g. a plastic substrate, on which a layer consisting of a resist being sensitive to the electron beam is arranged, a so-called electron beam resist. When recording marks on the resist, the material properties of the resist are modified such, that the marks can be etched away by a respective solvent, e.g. an etching liquid. This kind of resist is called a positive resist. Correspondingly, an inverted pattern can be generated by using a negative resist material. The recorded marks on the disc are hence converted into pits, and the disc can be used therefore for manufacturing a stamper for a mass production of read only-optical discs. The electron beam recorder allows in particular to record marks and spaces having different width w1, w2 within the spiral S1.

For recording tracks having marks and spaces being arranged as two spirals S2, S3 with an electron beam on a disc, as shown in Fig. 2b, first the spiral S2 is recorded completely, as described with regard to Fig. 1, by providing a constant radial feed corresponding with a track pitch of 2Tp. In a further step, the spiral S3 is recorded by recording marks and spaces in the area between the tracks of spiral S2 and adjusting the radial feed of the electron beam such, that the tracks of the spiral S3 have a track pitch of Tp with regard to the adjacent tracks of the spiral S2. The electron beam has to be adjusted therefore carefully at the beginning of the spiral S3, when starting the recording of the spiral S3, and the radial feed has to be precisely the same as for the spiral S2 to arrange for example the tracks T22', T24' of spiral S3 exactly within the tracks T21', T23' of spiral S2.

### SUMMARY OF THE INVENTION

The method provides a recording of data on a rotating disc by using an electron beam for recording marks along a track on the disc, the electron beam performing a wobble oscillation in a radial direction of the disc with a wobble amplitude for defining the width of a mark, by comprising the steps: providing the wobble oscillation with an amplitude having a value being sufficient for recording at least two tracks in parallel, and modulating the electron beam intensity for recording alternatingly a mark or a fraction of a mark of the first track, the second track or any further track. For recording a mark of a defined width, the electron beam is switched on in accordance with the mark width of the marks of each specific track, and is switched off or reduced in intensity to a sufficiently low value for providing spaces between the marks of each track or a land area separating the marks of the at least first and second track.

The method can be used advantageously for recording tracks with a track pitch, which is below the diffraction limit in radial direction of a corresponding pickup for reading of the data, to allow recording of data on the disc with high data density. The method is in particular also suitable for manufacturing a master, with which stampers can be produced for the production of read-only super resolution discs comprising pits of a size being below the diffraction limit of the pickup in track direction.

In another aspect of the invention, the electron beam intensity is modulated such, that the marks of the second track have a different shape with regard to the marks of the first track, e.g. the marks of a first and a second track have a different width, or the marks of a first track are inclined by a positive angle and the marks of a second track are inclined by a negative angle with regard to the track direction. The method provides in particular a constant radial feed for the electron beam for each revolution of the disc for recording consecutive tracks of defined track pitch, so that the tracks recorded on the rotating disc constitute two or more spirals, wherein consecutive tracks have a constant track pitch between each other.

In a preferred embodiment, a constant wobble amplitude is provided periodically such, that the electron beam scans always the width of the marks of the first track and of the second track and the land area in between both tracks during one wobble oscillation. The electron beam is switched on for recording a mark or a fraction of a mark of either the first track or the second track in accordance with the wobble amplitude, and the electron beam is switched off or reduced in intensity to provide spaces between marks in track direction and a land area between the marks in radial direction of the disc. When a mark of the first track is recorded, which has in parallel, in radial direction, a space on the second track, then the electron beam is only switched on during each oscillation for recording the mark with a defined width on the first track, the length of the mark being defined by the number of oscillations, during which the electron beam is switched on for recording the mark. When a mark has to be recorded on the second track, which has a space in parallel on the first track in radial direction, then the electron beam is correspondingly turned on during each oscillation only, when the electron beam scans the respective area on the second track. When marks have to be recorded in parallel on both tracks, the electron beam is then switched on accordingly, when the electron beam scans the respective area of the first track, switched off for providing the land area and switched on again for recording a respective fraction on the area of the second track.

In a second preferred embodiment, a varying wobble amplitude is provided for the electron beam corresponding with the actual geometry of the marks of each track. For example, a first wobble amplitude is provided in correspondence with the width of the marks of the first track, and a second wobble amplitude is provided in correspondence with the width of the marks of the second track. This allows to record a mark of a track completely with constant beam intensity without switching off the electron beam, when no mark has to be recorded on the respective location of the other track. When marks or fraction of marks have to be recorded in parallel, then a wobble amplitude is provided covering the width of the marks of the first track, the width of the marks of the second track and the land area in between the tracks, and the electron beam is switched on during each wobble oscillation for recording a fraction of the first mark and the second mark alternatingly and switched off for providing the land area.

### BRIEF DESCRIPTION OF THE DRAWINGS

Preferred embodiments of the invention are explained now in more detail below by way of example with reference to schematic drawings, which show:
- Fig. 1: a diagram for explaining a method for recording of marks along a track by using an electron beam according to prior art,
- Figs. 2a,: 2b track structures of an optical disc with tracks being represented by one or two spirals,
- Fig. 3: a diagram for explaining a first method according to the invention for recording of marks of two tracks in parallel by using an electron beam,
- Fig. 4: a diagram for explaining a second method according to the invention for recording of marks of two tracks in parallel,
- Fig. 5: a diagram for explaining a third method according to the invention for recording of marks of two tracks in parallel,
- Fig. 6: a diagram for explaining a fourth method according to the invention for recording of marks of two tracks in parallel, and
- Fig. 7: a diagram for explaining a method for generating a data set for performing the methods as described with regard to figures 3-6.

### DETAILED DESCRIPTION OF PREFERRED EMBODIMENTS

A method for recording tracks being arranged as two or more spirals on a disc according to the invention is described with regard to fig. 3. For recording two tracks T1, T2 in parallel, a wobble amplitude A_{2T} is provided which covers the width w1 of the marks of track T1, the width w2 of the marks of track T2 and the width of the land area LA in between both tracks. For recording a mark m1 of track T1, the electron beam is switched on over the respective area of the track T1. The electron beam is switched off during the land area LA in between tracks T1, T2. When a space s1 has to be provided on track T1, the electron beam is switched off for the respective area on the disc. When a mark m3 of track T1 is recorded in parallel with a mark m2 of track T2, the respective areas of mark m2 and mark m3 are recorded alternatingly, in accordance with the wobble amplitude A_{2T}, and always switching off the electron beam in between the marks m2, m3 for providing an unrecorded section, land area LA.

Further marks m4, m5 of tracks T1, T2 are recorded correspondingly, and for providing spaces s2, s3 between the marks m2-m4 and m3-m5, the electron beam is switched off. The marks of track T1 can have a width w1 being different from the width w2 of the marks of track T2 by selecting a respective on-time of the electron beam during the wobble period A_{2T}. In detail, the fraction of the on-time with regard to half of the time for performing a complete wobble oscillation with wobble amplitude A_{2T} defines the width of a mark, and the number of wobble oscillations during which the electron beam is switched on at the location of a specific track, defines the length of a mark on this track. By controlling the on/off ratio of the electron beam in accordance with the data to be recorded on the tracks T1, T2, two spirals S2, S3 having marks of different width as shown in Fig. 1b can be recorded therefore very precisely on the disc, when selecting for the electron beam a constant radial feed of 2Tp per revolution.

As an alternative method, a wobble amplitude A_{2T} is only provided when marks of two adjacent tracks have to be recorded in parallel, as shown in Fig. 4. A wobble amplitude A_{T11} is provided for recording a mark on track T11 when the adjacent track T12 has a space in radial direction r, and a wobble amplitude A_{T12} is provided for recording a mark on track T12 when the adjacent track T11 has a space in radial direction r. When recording marks of two adjacent tracks in parallel with the wobble amplitude A_{2T}, the electron beam is switched off between the tracks for providing the land area LA.

For the embodiment of Fig. 4, a wobble amplitude A_{T11} is provided for recording a mark m11 of track T11, because adjacent track T12 has at the corresponding position in radial direction r a space. The electron beam is switched on to record the mark m11 in track direction t with wobble amplitude A_{T11}, until a mark m12 has to be recorded for track T12. Then the wobble amplitude A_{2T} is provided and the beam intensity is on for recording the respective parts of marks m11 and m12 and the beam intensity is off in between tracks T11, T12. When a space s11 has to be recorded, the wobble amplitude A_{T12} is provided to continue recording of the mark m12.

When a mark m13 has to be recorded for track T11, again the wobble amplitude A_{2T} is provided until reaching the end of mark m12 and the beam intensity is periodically switched off when the electron beam is passing over the land area LA. The wobble amplitude of the electron beam is therefore varying between amplitude A_{T11} for recording only a mark in track T11, amplitude A_{T12} for recording only a mark of track T12, or amplitude A_{2T}, when a mark for track T11 and a mark for track T12 have to be recorded in parallel. The wobble amplitude A_{T11} corresponds with the width w1 of the marks of track T11 and the wobble amplitude A_{T12} corresponds with the width w2 of the marks of track T12. In addition to the change in wobble amplitude between A_{T11}, A_{T12} and A_{2T}, the average beam position is changing between the center of track T11, track T12 and the average position between the left side of T11 and the right side of T12.

The method can be used in particular for providing a master, by means of which stampers can be produced for manufacturing read-only optical discs. The disc, e.g. a Si-wafer or a glass-substrate, is covered for this application with an electron beam sensitive resist, which is modified on the locations, on which the electron beam records marks on the disc. The modified locations can be etched away by using a respective etching fluid so that the resist contains pits at the locations, where the electron beam has recorded the marks. The disc is then used as a master disc for producing stampers as known from prior art, for producing substrates having a data layer with a pit structure in accordance with the master disc, which substrates are the basic structures for the production of the read-only optical discs.

To provide a very precise geometry of the marks of each track, in particular to ensure sharp borders of the marks in radial direction r, the electron beam has to be switched on and off very precisely at the edges of the marks. The electron beam intensity has to be switched between full intensity and zero or essentially zero within a very short time, and the rotating speed of the disc and the oscillation frequency of the wobble oscillations have to be selected to be sufficiently slow for providing the precise borders.

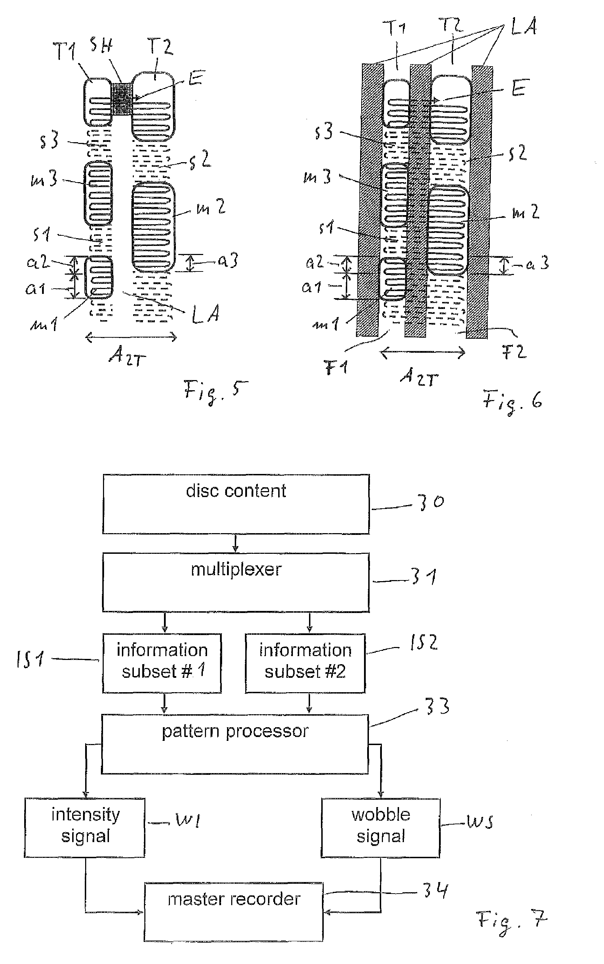

For providing sharp boarders for the marks of the track, an apparatus providing the electron beam comprises in a preferred embodiment a beam blocking element in the electron beam path within the apparatus, which blocks the land area LA for the electrons between the tracks, as shown in Fig. 5. The beam blocking element provides a shadow SH on the disc for the electrons, which corresponds with the land area LA, when the disc is rotating. The beam blocking element can be placed particularly in a conjugated plane of the electron beam recorder where the electrons are focused before reaching the disc surface, e.g. in a conjugated focal plane.

The electron beam E therefore has not to be switched off exactly at the right boarder of mark m1, when recording a fraction a1 of the mark m1 of track T1, but can be switched off a little bit later because of the shadow SH provided by the beam blocking element for the land area LA. The electron beam E provides in the embodiment of Fig. 5 a constant wobble amplitude A_{2T} covering the width of the marks of both tracks T1, T2, as explained with regard to Fig. 3. Correspondingly, when the electron beam is coming from the right side from the land area LA, the electron beam can be switched on a little bit earlier, to provide full beam intensity at the beginning of the border of the mark m1.

When the electron beam records fractions of marks for both tracks in parallel, the electron beam does not have to be switched off when scanning over the land area LA because of the beam blocking element. For example, when the electron beam records fraction a2 of mark m1 of track T1 and in parallel fraction a3 of mark m2 of track T2, the electron beam does not need to be switched off when passing from fraction a2 to fraction a3 during an oscillation period of the electron beam.

As an alternative solution for providing sharp borders for the marks, no resist is provided for the land areas LA between the marks, but only for the regions, in which marks of tracks have to be recorded, as shown in Fig. 6. The resist is only provided on the disc for example for a region F1, in which marks of track T1 have to be recorded, and region F2, in which marks of track T2 have to be recorded. The electron beam therefore has not be switched off, when passing over the land area, e.g. for recording fractions a2 and a3 of marks m1 and m2 in parallel, but only for providing spaces s1 s2, s3 between the marks of tracks T1, T2, in correspondence with the embodiment as described with regard to Fig. 5.

A disc having the resist only in the areas on which tracks have to be recorded, but not in the land areas, as described with regard to Fig. 6, can be manufactured by using a silicon wafer or a glass wafer having grooves, which correspond with the regions, in which tracks have to be recorded. The grooves may be etched for example into the silicon wafer. In a next step, the grooves are filled with the resist and any excess resist covering a land area is removed by spinning of the waver and/or polishing steps.

Although this solution requires additional steps for preparing an appropriate disc having regions without a resist, there is an essential advantage of the high precision mastering of the two nested data tracks. A high accuracy can be reached in radial direction for the pit edges along the tracks. High accuracy in track direction, which is mainly responsible for the jitter, is provided by the on/off switching of the electron beam. In addition, secondary or scattered electrons can be monitored at the position of the maxima of the wobble amplitude. If the wobbled electron beam passes the edges where the material changes from resist to non-resist, the different material provides a change of the current of the secondary or scattered electrons. This signal can be used therefore as a tracking signal for the electron beam. Advantageously two electron detectors should be provided within the electron beam recorder corresponding with the left and right side of the tracks to be recorded in parallel for providing a reliable tracking signal.

A method for providing a data set which can be used for producing a master disc in accordance with Figs. 3 to 6 is described with regard to Fig. 7. In a first step 30, the digital data to be recorded on the disc, e.g. the content of a movie, have to be provided as a continuous data stream, including control data and meta data for operating a respective read-only optical disc. In a next step 31, the data of the data stream have to be distributed into two or more data streams, in accordance with the number of spirals to be recorded on the disc. This can be made by using a multiplexer. If two spirals have to be recorded, the multiplexer provides a first information subset IS1 and a second information subset IS2, which contain the data content to be recorded on the disc. The information subset IS1 provides the data for the first spiral and contains e.g. the first half of the movie. The information subset IS2 provides the data for the second spiral and corresponds e.g. with the second part of the movie.

In a further step 33, a pattern processor converts the data of the information subsets IS1, IS2 into control signals for controlling the electron beam with regard to the wobble amplitude, e.g. frequency WS and intensity modulation WI including on/off information, for recording marks of the two tracks in parallel in correspondence with the embodiments as described with regard to Figs. 3 - 6. The pattern processor therefore converts the bits of the two data streams IS1, IS2 into control signals for recording marks and spaces of defined width and length on the disc by means of the electron beam recorder. The pattern processor takes into account also the rotation speed and the dimensions of the optical disc. In a further step 34, the data as provided by the pattern processor are stored in the electron beam recorder for recording the data onto the disc.

The described method allows therefore to produce a master disc having two or more spirals interleaved within each other, by providing a respective control of the electron beam of an electron beam recorder. In particular no special adjustment of the disc or any other means is necessary to align the second spiral within the first spiral. The method can be used in particular for a manufacturing of high data capacity optical discs comprising a nonlinear layer, e.g. a Super-RENS layer, including a data layer with spirals having a track pitch being below the diffraction limit in radial direction of a respective pickup for reading of the data, but other applications for e.g. manufacturing of Blu-ray discs or any other optical discs are also possible. The invention resides therefore in the claims herein after appended.

## Claims

1. Method for recording data on a rotating disc by using an electron beam for recording marks along a track on the disc, the electron beam performing a wobble oscillation with a wobble amplitude for defining the width of a mark, comprising the steps
providing a wobble amplitude (A_{2T}) for recording at least two tracks (T1, T2; T11, T12) in parallel, and
modulating the electron beam intensity for recording alternatingly a mark or a fraction of a mark of the first track (T1; T11) or of the second track (T2; T12).

2. The method of claim 1, comprising the step of providing a constant radial feed for the electron beam for each revolution of the disc for recording tracks with a defined track pitch (Tp) being arranged as two spirals (S2, S3).

3. The method of claim 1 or 2, comprising the step of switching the electron beam on and off in accordance with the mark width of the marks of each track.

4. The method of claim 1, 2 or 3, comprising the step of switching the electron beam on during defined time intervals for recording marks being different in width (w1, w2), orientation or shape.

5. The method of one of the preceding claims, wherein a constant wobble amplitude (A_{2T}) is provided for covering the width (w1, w2) of the marks (m1-m5) of the first and the second track (T1, T2) and a land area (LA) in between both tracks (T1, T2).

6. The method of claim 5, comprising the step of switching the electron beam on only during a fraction of each wobble oscillation for recording a fraction (a1, a2) of a mark of the first track (T1) or a fraction (a3) of a mark of the second track (T2).

7. The method of one of the preceding claims 1-4, wherein a varying wobble amplitude (A_{T11}, A_{T12}) is provided in accordance with the width (w1) of a mark of the first track (T11) or the width (w2) of the second track (T12), and in case marks are arranged in parallel on both tracks, the amplitude of the wobble oscillation is increased to an amplitude (A_{2T}) covering the width of the both tracks (T11, T12) and a land area (LA) in between.

8. The method of claim 7, comprising the step of switching the electron beam continuously on during subsequent wobble oscillations for recording a mark or a fraction of the mark when a space has to be provided in parallel of the marks, and switching the electron beam on only during a fraction of each increased wobble oscillation (A_{2T}) for recording a fraction of a mark of the first track (T11) or a fraction of a mark of the second track (T12) when marks on both tracks have to be provided in parallel.

9. The method of one of the preceding claims, wherein a blocking element is used within the electron beam recorder for blocking the electron beam, when passing over a land area (LA).

10. The method of one of the preceding claims, wherein an electron beam resist is provided only on sections on the disc corresponding with the width of the marks of each track.

11. The method of one of the preceding claims, comprising the step of etching the recorded marks away when the recording of data is finished and using the disc for producing a master for a manufacturing of read-only optical discs.

12. The method of one of the preceding claims, comprising the step of recording at least two tracks (T1, T2; T11, T12) having a track pitch (TP) being below the diffraction limit of λ/2NA of a pickup for reading of read-only discs manufactured by using the disc as a master disc.

13. Data disc manufactured by using a method according to one of the preceding claims.

14. The data disc of claim 13, having a track pitch being below the diffraction limit of λ/2NA of a pickup for reading of the disc.

15. Apparatus comprising a blocking element for performing a method according to one of the preceding claims 1-12.
